# EUROPEAN PATENT SPECIFICATION

(11) **EP 2 335 389 B1**
(45) Date of publication and mention of the grant of the patent: **19.06.2013**
(21) Application number: 09789116.2
(22) Date of filing: 12.08.2009
(51) Int. Cl.: H04L 29/06

(54) **DETECTION OF BEARER LOSS IN AN IP-BASED MULTIMEDIA SESSION**
DETEKTION DES TRÄGERVERLUSTS IN EINER AUF IP BASIERENDEN MULTIMEDIASITZUNG
DÉTECTION DE PERTE DE PORTEUSE DANS UNE SESSION MULTIMÉDIA PAR IP

(30) Priority: 21.11.2008 US 313630; 13.08.2008 US 188909 P
(43) Date of publication of application: 22.06.2011
(73) Proprietor: Alcatel-Lucent USA Inc., Murray Hill, NJ 07974-0636 (US)
(72) Inventor: LIU, Chung-zin, Naperville IL 60565 (US); MATHAI, Stinson, Samuel, Wheaton IL 60187 (US)
(74) Representative: Wetzel, Emmanuelle
(86) International application number: PCT/US2009/004611
(87) International publication number: WO 2010/019230

(56) References cited:
- WO-A-2008/055549
- DONOVAN J ROSENBERG CISCO SYSTEMS S: "Session Timers in the Session Initiation Protocol (SIP); rfc4028.txt" IETF STANDARD, INTERNET ENGINEERING TASK FORCE, IETF, CH, 1 April 2005 (2005-04-01), XP015041971 ISSN: 0000-0003

## Description

### FIELD OF THE INVENTION

The present invention relates generally to communication systems, and more particularly to bearer loss detection.

### BACKGROUND OF THE INVENTION

Multimedia services over IP (Internet Protocol) are a critical service for service providers and service providers are looking at VoIP (Voice over Internet Protocol) as the first major application to use this real time service. VoIP is being built mainly using the IMS (IP Multimedia Subsystem) core network and various access networks, which include broadband connections such as cable, DSL (Digital Subscriber Line), and fiber and also various wireless access networks such as DORA, WiMAX (Worldwide Interoperability for Microwave Access), LTE (Long Term Evolution), etc.

Voice service in communication systems is an essential service. Therefore, all aspects of voice service have to perform extremely well. One area of interest is the area of detecting bearer loss. Detecting bearer loss during a call is a non-trivial process as this requires the many network elements both at the signaling and the bearer level to detect that there has been a loss in connectivity.

This is typically further complicated by the fact that the design of such networks essentially separate the signaling and the bearer network elements to a good degree. This separation makes the detection and communication of the detection even more complicated. The bearer loss or connection loss could have happened in the core network elements such as a MGW (Media GateWay) or MRF (Media Resource Function). The bearer loss or connection loss could also have happened in the access network elements such as a RNC (Radio Network Controller), GWs or even the mobile unit, also known as an access terminal, itself.

A first problem that is encountered is how can a communication system detect a loss of bearer in the core network.

A second problem that is encountered is how can a communication system detect a loss of bearer in the access network.

A third problem that is encountered is for various wireless access networks, the originating party of the session can go dormant on the packet access channel while the called party is reached/alerted and finally answers. This occurs because of the lack of packet data activity on the originators access connection. This issue can cause voice clipping and call setup delay.

One existing mechanism which can be used to help detect bearer loss is using RTCP (Real-time Transport Control Protocol). RTCP is mainly designed to determine network performance and various other aspects of the bearer connection, but loss of connection can also be gleaned from RTCP packets. Note that this kind of a protocol is mainly an end-to-end protocol and if the end devices (such as the mobile unit) are the ones that are having the issues then this protocol is not very effective. Moreover, because of the bandwidth cost associated with the effective use of RTCP, this protocol is generally not supported or used.

Therefore, a need exists for a way to determine when there is bearer loss in a communication system. Further, this determination needs to differentiate between true bearer loss and legitimate lack of packet data activity from one of the parties in a call.

WO 2008/055549 A1 discloses a method and an apparatus for controlling a communication established between terminals through a telecommunications system. When a malfunction event related to a communication established between terminals is detected, a determination is made in the telecommunications system of a faulty terminal a non-faulty terminal, according to the malfunction event. Subsequently, the telecommunications systems determines whether a terminal is registered for a user identifier which was registered through the faulty terminal, or which is related to it by subscription and, in that case, it establishes a new communication between said registered terminal and the non-faulty terminal.

### BRIEF SUMMARY OF THE INVENTION

The present invention provides a method for detection of bearer loss in an IP-based multimedia session according to independent claim 1. If the session is setup as a VoIP call between an Access Terminal (AT) and another user B, then this session is a two-way session where traffic is expected to flow in both directions. During the process of session setup, the network elements involved in the signaling of the session establish the session. That is, the AT in conjunction with the IMS core establishes the VoIP session. As part of the VoIP session establishment the IMS core and the AT negotiate the media types, hence bandwidth, for the sessions and also the connection points, such as the IP address and ports of the bearer entities. This negotiated media information is called codec information.

The codec for this session is also negotiated which can tell the bearer node in the access network, such as the SGW, what packets per second count is expected. For example, the Policy and Charging Rules Function (PCRF) can tell the SGW the source and destination IP addresses of session and also that the codec is Enhanced Variable Rate CODEC (EVRC), the payload type # is 96 and the expected rate of packets is 50 packets/sec. The SGW can use this information to assess the flow of traffic in each direction.

The IMS core communicates the codec information to the PCRF for policy enforcement and gating purposes. The PCRF in turn sends this codec information to the Signaling Gateway (SGW) and the Packet Data Network Gateway (PGW). The codec information includes the connection information and the direction of traffic flow to and from the core network.

At this point the SGW knows what to expect from the core network side and also what to expect from the access network side. The SGW can now monitor the traffic flow and determine if there is a discrepancy in the flow of traffic and report this discrepancy to the PCRF.

### BRIEF DESCRIPTION OF THE SEVERAL VIEWS OF THE DRAWINGS

FIG. 1 depicts an IMS system in accordance with an exemplary embodiment of the present invention.
FIG. 2 depicts a call flow of a method for detecting bearer loss in accordance with an exemplary embodiment of the present invention.

### DETAILED DESCRIPTION OF THE-INVENTION

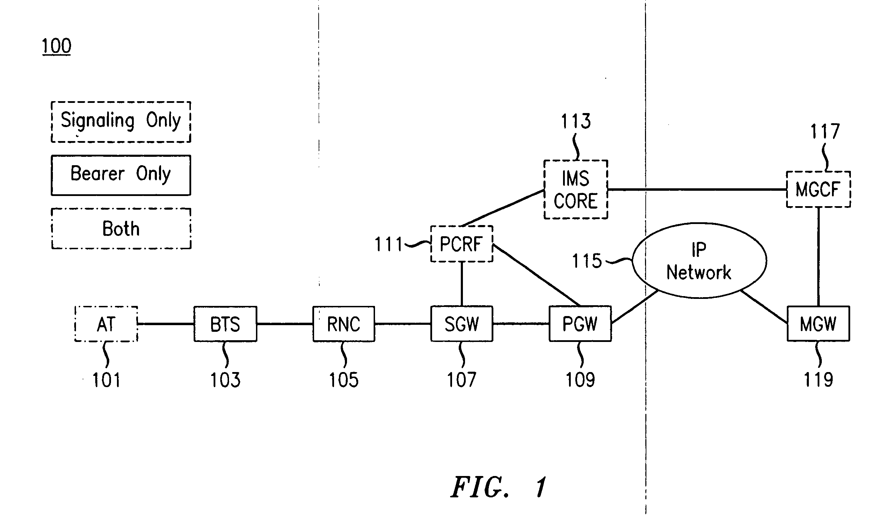

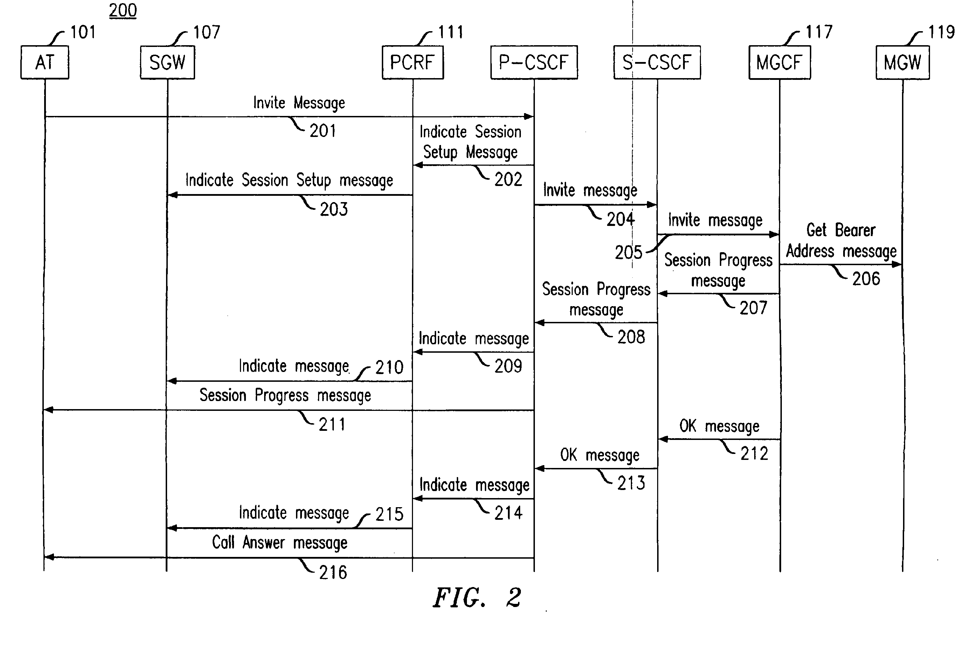

The present invention can be better understood with reference to FIGs. 1 and 2. FIG. 1 depicts Wireless IMS system 100 in accordance with an exemplary embodiment of the present invention. Wireless IMS system 100 comprises Access Terminal (AT) 101, Base Station (BTS) 103, Radio Network Controller (RNC) 105, Serving Gateway (SGW) 107, Packet Gateway (PGW) 109, Policy Control and Repository Function (PCRF) 111, IMS Core 113, IP Network 115, Media Gateway Control Function (MGCF) 117, and Media Gateway (MGW) 119.

AT 101 is the VoIP capable mobile device in this scenario.

Base Station (BTS) 103 sends and receives over the air signals with AT 101.

Radio Network Controller (RNC) 105 controls BTS 103 and connects to SGW 107.

SGW 107 is a network element that bridges the connection from the access network and the core network via PGW 109. Policy enforcement can be done within SGW 107, which connection is made to PCRF 111.

PGW 109 preferably works in conjunction with SGW 107 to connect to IP core network 115. Policy enforcement can be done within PGW 109 and signals would be sent to PCRF 111.

PCRF 111 is the main policy engine within network 100. PCRF 111 is preferably a signaling-only element. In an exemplary embodiment, no bearer passes through PCRF 111.

IMS Core 113 is the application core and preferably includes a P-CSCF and a S-CSCF. IMS Core 113 is preferably a signaling-only element. In an exemplary embodiment, no bearer passes through IMS Core 113.

IP Network 115 is a packet switched network.

MGCF 117 controls MGW 119. MGCF 117 is preferably a signaling-only element. In an exemplary embodiment, no bearer passes through MGCF 117.

MGW 119 connects the IP bearer to the TDM bearer.

FIG. 2 depicts a call flow 200 of a method for detecting bearer loss in accordance with an exemplary embodiment of the present invention. A multimedia session is initiated by AT 101 when AT 101 sends Invite message 201 to P-CSCF. Invite message 201 preferably includes various media characteristics which include connection addresses, codec information, traffic direction, etc. In an exemplary embodiment, Invite message 201 includes sender information, recipient information, SDP information, a port, and whether the flow of traffic will be in the send or receive direction or both directions.

P-CSCF receives Invite message 201 and forwards this message to PCRF 111 as Indicate Session Setup message **202.** Indicate Session Setup message 202 preferably includes near end port information, application type, and traffic direction. In an exemplary embodiment, PCRF 111 establishes policy and communicates this information to SGW 107.

PCRF 111 communicates the Session setup information and the bearer characteristics to SGW 107 by sending Indicate Session Setup message 203. SGW 107 preferably uses this information to adjust the dormancy timers on the originating side so that the originating access link remains active during the call setup.

During call setup, IMS Core 113 and/or PCRF 111 can tell SGW 107 the state of the session. In the case of the origination side, PCRF 111 can tell the originating SGW 107 that a session establishment is being attempted. This will prompt SGW 107 to override or extend the dormancy timer on the originating side, thus avoiding clipping and other end-user issues. This ability to intelligently make a decision on the access network connection solves the problem of voice clipping and call setup delay by incorrectly recognizing a lack of packet data activity as dormancy by the originating party of the session while the called party is reached/alerted and finally answers. This occurs because of the lack of packet data activity on the originators access connection.

P-CSCF passes Invite message 201 to the S-CSCF as Invite message **204.**

S-CSCF determines the route for this call via ENUM or DNS lookup and sends this call to MGCF 117 via Invite message 205 for delivery into the PSTN.

Upon receiving Invite message 205, MGCF 117 sends Get Bearer Address message **206** to MGW 119. MGW 117 sets up the bearer connection for this call and returns the bearer address to MGCF 117.

MGCF 117 receives the bearer address from MGW 119 and passes this media information to S-CSCF via Session Progress message **207.**

S-CSCF receives Session Progress message 207 from MGCF 117. S-CSCF passes the media information from Session Progress message 207 to P-CSCF via Session Progress message **208.**

P-CSCF receives Session Progress message 208 and sends this information to PCRF 111 via Indicate message **209.** PCRF 111 preferably establishes policy and communicate this information to SGW 107.

PCRF 111 communicates the Session setup information and the bearer characteristics to SGW 107 via Indicate message **210.** SGW 107 preferably uses this information to adjust the bearer loss timers on the originating side. Since SGW 107 now knows the expected traffic characteristics from the Core Network via MGW 119, SGW 107 can keep track of the received and transmitted bearer traffic. Deviation from this traffic pattern for a configurable duration of time (bearer loss timer) will cause SGW 107 to signal to the call control layer of a possible bearer loss.

If SGW 107 detects that there has been no packets slowing from the core network to the access side for a specific amount of time, SGW 107 can send a message to PCRF 111 alerting PCRF 111 of a possible loss of bearer issue. The signaling network elements can act on this by checking to see if the signaling connection is still up or alerting the user of the issue. This provides the ability to detect a loss of bearer in the core network.

P-CSCF passes the media information from MGW 119 to AT 101 via Session Progress message **211.**

When the called party answers the call, MGCF 117 sends OK message **212** to S-CSCF.

S-CSCF sends OK message **213,** which indicates that the called party answers the call request, to the P-CSCF.

P-CSCF sends this information to PCRF 111 via Indicate message **214.** Indicate message 214 preferably includes far end port information and traffic direction and characteristics. PCRF preferably establishes policy and communicates this information to SGW 107.

PCRF 111 can send any changes in the media characteristics to SGW 107 via Indicate message **215.** From this point on SGW 107 now knows the expected traffic characteristics from MGW 119 and also from the access network, it can keep track of the received and transmitted bearer traffic. Deviation from this traffic pattern for a configurable duration of time, for example a bearer loss timer, causes SGW 107 to signal to the call control layer of a possible bearer loss.

Armed with this knowledge, if SGW 107 detects that there has been no packets flowing from the access side for a predetermined amount of time or detects that the access side went dormant, then SGW 107 can send a message to PCRF 111 alerting it of a possible loss of bearer. The signaling network elements can act on this by checking to see if the signaling connection is still up or by alerting the user of the issue. Note that on the access side, if the battery of AT 101 is pulled during a session or if AT 101 runs into an RF hole then the access side puts the connection into dormancy and nothing else is done. In this scenario SGW 107 will recognize the discrepancy in the current behavior and the expected behavior and signal the signaling entities to take action. This allows the communication system to detect a loss of bearer in the access network.

P-CSCF sends call answer message 216 to AT 101.

While this invention has been described in terms of certain examples thereof, it is not intended that it be limited to the above description, but rather only to the extent set forth in the claims that follow.

## Claims

1. A method for detecting bearer loss in an IP-based multimedia session, the method comprising:
receiving a call request message (201) from an access terminal (101);
communicating session setup information and bearer characteristics by sending an indicate session setup message;
setting a dormancy timer by using the session setup information and the bearer characteristics;
determining that a packet has not been received when expected based upon expiration of the dormancy timer;
alerting a network element of a possible loss of bearer; and
completing the call request.

2. A method for detecting bearer loss in an IP-based multimedia session in accordance with claim 1, the method further comprising the step of determining if bearer has been lost based upon receipt of the alert.

3. A method for detecting bearer loss in an IP-based multimedia session in accordance with claim 1, wherein the step of determining if bearer has been lost comprises checking to see if the signaling connection is still up.

4. A method for detecting bearer loss in an IP-based multimedia session in accordance with claim 1, the method further comprising the step of alerting the access terminal.

## Patentansprüche

1. Verfahren zur Detektion eines Trägerverlustes in einer auf IP basierenden Multimediasitzung, wobei das Verfahren umfasst:
Empfangen einer Rufanforderungsnachricht (201) von einem Zugangsendgerät (101);
Übermitteln von Sitzungsaufbauinformationen und Trägereigenschaften durch Senden einer Sitzungsaufbau-Anzeignachricht;
Einstellen eines Ruhezustands-Timers unter Verwendung der Sitzungsaufbauinformationen und der Trägereigenschaften;
Bestimmen, dass ein Paket nicht wie erwartet empfangen wurde, auf der Basis des Ablaufs des Ruhezustands-Timers;
Warnen eines Netzwerkelements vor einem möglichen Trägerverlust; und
Vervollständigen der Rufanforderung.

2. Verfahren zur Detektion eines Trägerverlustes in einer auf IP basierenden Multimediasitzung nach Anspruch 1, wobei das Verfahren weiterhin den Schritt des Ermittelns, ob der Träger verloren wurde, auf der Basis des Empfangs der Warnung umfasst.

3. Verfahren zur Detektion eines Trägerverlustes in einer auf IP basierenden Multimediasitzung nach Anspruch 1, wobei der Schritt des Ermittelns, ob der Träger verloren wurde, das Überprüfen, ob die Signalisierungsverbindung noch besteht, umfasst.

4. Verfahren zur Detektion eines Trägerverlustes in einer auf IP basierenden Multimediasitzung nach Anspruch 1, wobei das Verfahren weiterhin den Schritt des Warnens des Zugangsendgeräts umfasst.

## Revendications

1. Procédé de détection d'une perte de porteuse dans une session multimédia IP, le procédé comprenant les étapes suivantes :
recevoir un message de demande d'appel (201) à partir d'un terminal d'accès (101) ;
communiquer des informations d'établissement de session et des caractéristiques de porteuse en envoyant un message d'établissement de session d'indication ;
régler un temporisateur de latence en utilisant les informations d'établissement de session et les caractéristiques de porteuse ;
déterminer qu'un paquet n'a pas été reçu au moment prévu sur la base de l'arrêt du temporisateur de latence ;
alerter un élément de réseau d'une éventuelle perte de porteuse; et
accomplir la demande d'appel.

2. Procédé de détection d'une perte de porteuse dans une session multimédia IP selon la revendication 1, le procédé comprenant en outre l'étape consistant à déterminer si une porteuse a été perdue sur la base de la réception de l'alerte.

3. Procédé de détection d'une perte de porteuse dans une session multimédia IP selon la revendication 1, dans lequel l'étape consistant à déterminer si une porteuse a été perdue comprend la vérification pour voir si la connexion de signalisation est toujours établie,

4. Procédé de détection d'une perte de porteuse dans une session multimédia IP selon la revendication 1, le procédé comprenant en outre l'étape d'alerte du terminal d'accès.
